# Europäisches Patentamt

# European Patent Office

# Office européen des brevets

(11) Veröffentlichungsnummer: **0 176 102**
**B1**

(12) # EUROPÄISCHE PATENTSCHRIFT

(45) Veröffentlichungstag der Patentschrift:
**10.08.88**

(21) Anmeldenummer: **85112241.6**

(22) Anmeldetag: **27.09.85**

(51) Int. Cl.⁴: **B 65 D 85/48,** B 60 P 3/00,
B 65 D 90/12

(54) **Transportgestell, insbesondere für Flachglas-Stapel.**

(30) Priorität: **27.09.84 DE 3435579**
**27.09.84 DE 3435502**

(43) Veröffentlichungstag der Anmeldung:
**02.04.86 Patentblatt 86/14**

(45) Bekanntmachung des Hinweises auf die Patenterteilung:
**10.08.88 Patentblatt 88/32**

(84) Benannte Vertragsstaaten:
**AT BE DE FR IT NL**

(56) Entgegenhaltungen:
**DE-A-3 305 840**
**DE-A-3 325 881**
**DE-B-1 036 756**
**US-A-3 063 667**

(73) Patentinhaber: **Pfab, Hans, Holzratstrasse 25,**
**D-8080 Weiden (DE)**
Patentinhaber: **VEGLA Vereinigte Glaswerke**
**GmbH, Viktoriaallee 3-5, D-5100 Aachen (DE)**

(72) Erfinder: **Pfab, Hans, Holzratstrasse 25, D-8080**
**Weiden (DE)**
Erfinder: **VEGLA Vereinigte Glaswerke GmbH,**
**Viktoriaallee 3-5, D-5100 Aachen (DE)**

(74) Vertreter: **Steinmann, Otto C., Kanzlei Münich,**
**Steinmann, Schiller Willibaldstrasse 36, D-8000**
**München 21 (DE)**

EP 0 176 102 B1

LIBER, STOCKHOLM 1988

## Beschreibung

Die Erfindung bezieht sich auf ein Transportgestell für annähernd senkrecht gestellte plattenförmige Transportgüter, insbesondere Flachglas-Stapel, gemäß dem Oberbegriff des Patentenspruchs 1 sowie auf ein Innenladerfahrzeug.

Flachglas-Innenladerfahrzeuge, mit denen Flachglas-Stapel mit speziellen Flachglas-Transportgestellen transportiert werden, sind bekannt. Derartige Flachglas-Innenladerfahrzeuge sind zumeist Sattelzüge, deren Sattelanhänger zwei Längsträger aufweisen, an denen die Räder angelenkt sind, und zwischen die die Flachglas-Transportgestelle derart einbringbar sind daß die Transportgestelle mit Längsträgern auf Tragprofilen an den Längsträgern des Sattelanhängers aufliegen.

Bekannte Transportgestelle haben zumeist einen satteldachartigen Rahmen mit einem kleinen Dachwinkel, so daß die an den Rahmen gelehnten Flachglas-Stapel annähernd senkrecht stehen. Die zumeist verwendeten Transportgestelle nehmen Flachglasstapel mit einer Länge bis zu ca. 6 m auf; das Gesamtgewicht der beladenen Gestelle beträgt dann ca 25 Tonnen.

Der Rahmen der Transportgestelle weist zumeist zwei Längsträger auf, mit denen das Transportgestell auf den Tragprofilen des Fahrzeugs aufliegt. Die bekannten Transportgestelle weisen ferner vier an den Enden der Längsträger angebrachte Füße auf. Da die Fahrzeuge zum Aufnehmen und zum Absetzen der Transportgestelle nur um etwa 10 cm abgesenkt werden können und die Füße sich zudem im hinteren bzw. vorderen Endbereich des Sattelanhängers bzw. im Knickbereich des Sattelzuges befinden, d.h. in einem Bereich, in dem die Bodenfreiheit kritisch ist, sind bei den bekannten Transportgestellen die Füße in Richtung ihrer Längsrichtung beweglich ausgebildet. Nach dem Aufnehmen des Transportgestells werden die Füße hochgeschoben und mit einem Stift in der hochgeschobenen Stellung arretiert. Andererseits werden vor dem Absetzen des Transportgestells die Füße herabgelassen und in dieser Stellung ebenfalls mit einem Stift arretiert. Es besteht jedoch die Gefahr daß vergessen wird, die Standfüße des Transportgestells vor dem Entladen des Fahrzeuges in der Normalstellung, d. h. der ausgefahrenen Stellung zu arretieren. Das Nichtarretieren eines oder mehrerer Füße bei den bekannten Flachglas-Transportgestellen hat unweigerlich zur Folge, daß das Transportgestell in dem Moment umstürzt, in dem das Innenladerfahrzeug beim Absetzen das Transportgestell freigibt. Es bedarf wohl keiner näheren Erläuterung, daß das Umstürzen von ca. 25 t Glas nicht nur die Zerstörung der Flachglas-Stapel und des Transportgestells, sondern auch zumeist noch größere Schäden in der Werkshalle zur Folge haben kann in der das Transportgestell abgestellt wird.

Der Erfindung liegt die Aufgabe zugrunde, ein Transportgestell für Innenladerfahrzeuge gemäß dem Oberbegriff des Patentanspruchs 1 derart weiterzubilden, daß keine Bedienungsfehler insbesondere beim Ausfahren der Füße aus der Transportstellung in die Normalstellung auftreten können.

Eine erfindungsgemäße Lösung dieser Aufgabe ist mit ihren Ausgestaltungen in den Patentansprüchen gekennzeichnet.

Erfindungsgemäß erfolgt die Arretierung der beweglichen Füße in der Normalstellung, d.h. in der Stellung, in der das Transportgestell auf den Füßen ruht, nicht von Hand, sondern selbsttätig durch die Belastung der Füße durch das Transportgestell sowie der eventuell darauf befindlichen Flachglas-Stapel. Aufgrund der selbsttätigen Arretierung werden Bedienungsfehler vermieden, die - wie bereits ausgeführt - bei den bekannten Gestellen zum Umstürzen des Gestells führen können. Die erfindungsgemäß vorgesehene selbsttätige Arretierung ist bei Füßen, die durch eine Schwenkbewegung aus der Normalstellung, in der das Gestell auf ihnen ruht, in die Transportstellung überführt werden, konstruktiv sehr viel einfacher zu verwirklichen, als bei Fußkonstruktionen gemäß dem Stand der Technik, bei der die Überführung durch eine Schiebebewegung erfolgt. Die Schwenkbewegung um eine zur Längsachse des Transportgestells parallele Achse hat darüberhinaus den Vorteil, daß Stöße etc., die beim Aufnehmen bzw. Absetzen des Transportgestells durch das Fahrzeug hervorgerufen werden, die Arretierung nicht lösen und damit kein Umfallen des Transportgestells bewirken können.

Das erfindungsgemäße Transportgestell hat ferner den weiteren Vorteil, daß die schwenkbaren Füße in der Transportstellung nicht in den Raum hineinragen, der für die Flachglas-Stapel vorgesehen ist. Aus diesem Grunde mußten bei den bekannten Transportgestellen, bei denen die Füße längsverschiebbar ausgebildet sind, die Füße an den Enden des Gestells außerhalb des Bereichs angeordnet werden, in dem die Flachglas-Stapel untergebracht sind. Hierdurch ist die Länge der bekannten Transportgestelle größer als die der Flachglasstapel, die mit ihnen transportiert werden können. Das erfindungsgemäße Transportgestell, bei dem die Füße nicht an den Enden des Gestells angeordnet werden müssen, hat eine kleinere Länge als die bekannten Transportgestelle. Diese reduzierte Baulänge ermöglicht es, das erfindungsgemäße Transportgestell im Gegensatz zu den bekannten Transportgestellen in den Glasfabriken an die automatische Stapelvorrichtung heranzubringen, so daß die Gestelle automatisch beladen werden können.

Weiterbildungen der Erfindung sind in den Unteransprüchen gekennzeichnet:

Zur Überführung in die Transportstellung können die beweglichen Füße des erfindungsgemäßen Transportgestells nach außen oder nach innen geschwenkt werden. Diese Schwenkbewegung kann für jeden Fuß einzeln beispielsweise von Hand oder für alle Füße oder für Gruppen von Füßen - beispielsweise die Füße einer Längsseite - gemeinsam mittels eines oder mehrerer Betätigungsorgane durchgeführt werden. Ferner ist es auch möglich, die Füße so auszubilden, daß sie wahlweise nach außen oder nach innen geschwenkt werden können.

Dabei hat insbesondere das Schwenken nach außen (Anspruch 2) eine Reihe von Vorteilen:

Beispielsweise ist es gemäß Anspruch 3 möglich, die Füße ohne Beeinträchtigung der Bodenfreiheit im Transportzustand an Querträgern des Transportgestells anzubringen, auf denen die Flachglas-Stapel aufliegen. Da die Füße an den Auflagepunkten der Last angebracht sind, werden keinerlei Biegemomente auf das Transportgestell ausgeübt, so daß das Transportgestell konstruktiv einfacher und damit leichter ausgeführt werden kann.

Die nach außen erfolgende Schwenkbewegung der Füße hat darüberhinaus den Vorteil, daß die Füße gemäß Anspruch 16 in Ausnehmungen in den Trageprofilen des Flachglas-Innenladerfahrzeugs eingreifen können, die Anschläge bilden. Hierdurch wird das Transportgestell während der Fahrt gegen Verrutschen entlang der Längsachse und gegen Kippbewegungen gesichert. Eine zusätzliche Möglichkeit zur Arretierung der Fusse und damit des Transportgestells ist im Anspruch 10 gekennzeichnet.

Bildet man gemäß Anspruch 4 das erfindungsgemäße Transportgestell für Innenladerfahrzeuge so aus, daß die untere Begrenzungsfläche der hochschwenkbaren Füße in der Transportstellung in einer Ebene mit der Unterseite der Querträger liegt, und sorgt man für eine Arretierung der Füße in dieser Stellung, so wird die Auflagebreite des Transportgestells, wenn es nicht auf den Füßen steht, sondern auf den Querträgern aufliegt, vergrößert. Dies ist insbesondere dann von Vorteil, wenn das Transportgestell nicht mit einem Innenladerfahrzeug, sondern mit einem Tieflader transportiert werden soll. Beispielsweise ist beim Transport auf Güterwägen der Deutschen Bundesbahn eine größere Auflagebreite von Transportgestellen für Flachglas-Stapel vorgeschrieben, als sie von den gattungsgemäßen Transportgestellen für Innenladerfahrzeugen erreicht wird. Durch eie erfindungsgemäße Ausbildung läßt sich die Auflagebreite der Transportgestelle beim Transport auf Tiefladern so vergrößern, daß die Bundesbahn-Vorschrift erfüllt werden kann, und die für Innenlader-Transport ausgelegten Gestelle auch für Tieflader-Transport genutzt werden können.

Möglichkeiten, die hochschwenkbaren Füße in der oberen Stellung zu arretieren, sind in den Ansprüchen 8 und 9 gekennzeichnet.

Im Anspruch 5 ist eine konstruktiv einfache Lösung der selbsttätigen Arretierung der Füße durch Belastung gekennzeichnet. Der gemäß Anspruch 6 vorgesehene Anschlag, von dem eine einfache konstruktive Ausgestaltung im Anspruch 7 angegeben ist, stellt eine Sicherheitsmaßnahme gegen Querversetzungen des Transportgestells dar, die beim Aufnehmen des Transportgestells durch das zurücksetzende Fahrzeug auftreten können.

In Anspruch 13 ist gekennzeichnet, daß von den beiden Füßen an jeder Längsseite einer starr sein kann. Erfindungsgemäß ist nämlich erkannt worden, daß es beispielsweise dann, wenn sich beim Transport jeweils ein Fuß auf jeder Längsseite des Transportgestells im Bereich der hinteren Achsen eines Sattelauflegers befindet, nicht erforderlich ist, diesen Fuß beweglich auszubilden. Das Transportgestell wird nämlich beim Aufnehmen höher als der Federweg der Hinterräder hochgehoben. Damit ist es nur erforderlich, das Fußpaar, das sich beim Transport im "Knickbereich" des Sattelzuges befindet, beweglich auszuführen, um die Bodenfreiheit des Sattelzuges zu erhöhen. Hierdurch wird nicht nur der konstruktive Aufbau des Transportgestells, sondern auch der des Sattelanhängers vereinfacht, da nur noch zwei Öffnungen bzw. Ausnehmungen vorzusehen sind, durch die die Bedienungsperson zum Hochschwenken der Füße nach dem Aufnehmen des Transportgestells hindurchgreifen muß.

Darüberhinaus hat die Ausbildung zweier Füße als starre Füße den Vorteil, daß in den starren Füßen Transportrollen vorgesehen werden können, die mittels eines Exzenters vorgeschwenkt werden können (Anspruch 14). Die Exzenterstange zum Bedienen des Exzenters ist dabei so ausgeführt, daß sie nur bei leerem Transportgestell bedient werden kann.

Diese Transportrollen erlaubt es, das leere Transportgestell beispielsweise mittels eines Hubwagens oder eines Gabelstaplers zu verfahren. Bei den bekannten Transportgestellen ist dagegen ein Versetzen der Transportgestelle nach dem Entladen nur mittels eines Innenladerfahrzeugs oder einer Krananlage möglich.

Gemäß Anspruch 15 kann auch das starre Fußpaar gegebenenfalls demontiert, beispielsweise über die Unterkante des Transportgestells hochgeschwenkt werden, um einen Transport des Gestells beispielsweise auf einem Tiefladerwagen zu ermöglichen. Ferner ist es auch möglich, in einem erfindungsgemäß ausgebildeten Fuß eine Transportrolle vorzusehen.

Bei den bekannten Flachglas-Innenladerfahrzeugen haben die Tragprofile eine waagrechte obere Abschlußfläche, auf denen eine ebenfalls waagrechte Fläche der Längsträger der Flachglas-Transportgestelle aufliegt. Aufgrund dieser-Konstruktion der Tragprofile sowie der korrespondierenden Auflageflächen der Längsträger spreizen sich die Längsträger des Innenladerfahrzeugs beim Beladen, d.h. beim Aufnehmen des Transportgestells, auseinander. Dies kann dazu führen, daß die Heckabschlußtüre, die die einzige Verbindung im hinteren Bereich der vorne am Aufleger des Sattelanhängers befestigten Längsträger des Innenladerfahrzeugs darstellt, nicht oder nur mangelhaft geschlossen werden kann. Eine nur mangelhaft geschlossene Heckabschlußtüre kann zur Folge haben, daß sich die Längsträger des Fahrzeugs während der Fahrt so stark auseinanderspreizen, daß die Längsträger des Transportgestells nicht mehr auf den Tragprofilen aufliegen und das Transportgestell zwischen den Längsträgern durchfällt.

Eine Abhilfe schafft die Weiterbildung gemäß den Ansprüchen 17 folgende, die eine Aufspreizen des Fahrzeugs unter Belastung verhindert: Die Tragprofile an den Längsträgern des Innenladerfahrzeugs sowie die korrespondierenden Auflageflächen der Längsträger des Transportgestells weisen eine nach unten und nach außen geneigte Fläche auf. Hierdurch wird beim Aufnehmen des Transportgestells mit dem abgesenkten Innenladerfahrzeug eine Kraftkomponente erzeugt, die die Längsträger des Fahrzeugs "zusammendrückt". Damit ist sichergestellt, daß sich die Heckabschlußtüre, da außer im vorderen Bereich die einzige Verbindung der Längsträger darstellt, ordnungsgemäß schließen läßt, da bereits durch die spezielle Konstruktion der Tragprofile und der entsprechenden Auflageflächen des Flachglas-Transportgestells die Längsträger in ihrer Sollstellung gehalten werden.

Gemäß Anspruch 18 weisen die Tragprofile sowie die korrespondierenden Auflegeflächen an dem Transportgestell zusätzlich zu dem geneigten Flächenteil einen horizontal verlaufenden Flächenteil auf, der für eine zusätzliche Auflage sorgt. Diese Schwalbenschwanz-ähnliche Gestaltung der Tragprofile sowie der auf ihnen aufliegenden Längsträger sorgt nicht nur für eine Kraftkomponente, die die Längsträger "zusammendrückt", sondern auch für eine gute und sichere Auflage des Transportgestells.

Die spezielle Ausgestaltung der Auflageflächen, die die Längsträger, auch ohne daß die Heckabschlußtür geschlossen ist, beim Aufnehmen des Transportgestells "zusammenhält", erlaubt es, den Tragprofilen sowie den korrespondierenden Auflageflächen an den Transportgestellen eine Neigung in Längsrichtung zu geben. Hierdurch muß das Innenladerfahrzeug nicht mehr so stark abgesenkt werden, um das Transportgestell aufzunehmen, wie dies bei den bekannten Innenladerfahrzeugen der Fall ist, die um ca. 10 cm abgesenkt werden müssen. Dies verringert die Zeitdauer des Be- und Entladevorgangs und damit beispielsweise die Zeit, in der das Innenladerfahrzeug mit laufendem Motor in einer Werkshalle stehen muß, beträchtlich.

Die erfindungsgemäße Ausgestaltung der Tragprofile gemäß einem der Ansprüche 17 bis 19 kann in Verbindung mit beliebigen Flachglas-Transportgestellen verwendet werden. Besonders vorteilhaft ist sie jedoch in Verbindung mit einem Transportgestell gemäß einem der Ansprüche 1 bis 15.

Die Erfindung wird nachstehend anhand eines Ausführungsbeispiels unter Bezugnahme auf die Zeichnung näher beschrieben, in der zeigen:

Fig. 1 eine Seitenansicht eines erfindungsgemäßen Transportgestells,
Fig. 2 eine Vorderansicht des in Fig. 1 dargestellten Transportgestells,
Fig. 3 vergrößert den mit III in Fig. 1 bezeichneten Bereich für ein erstes Ausführungsbeispiel der Erfindung,
Fig. 4 einen Querschnitt bei der Linie IV-IV in Fig. 3,
Fig. 5 vergrößert den mit III in Fig. 1 bezeichneten Bereich für ein zweites Ausführungsbeispiel,
Fig. 6 schematisch die Gestaltung des Tragprofils des Innenladerfahrzeugs und des Transportgestells, und
Fig. 7 schematisch die Neigung des Tragprofils des Fahrzeugs sowie des Transportgestells.

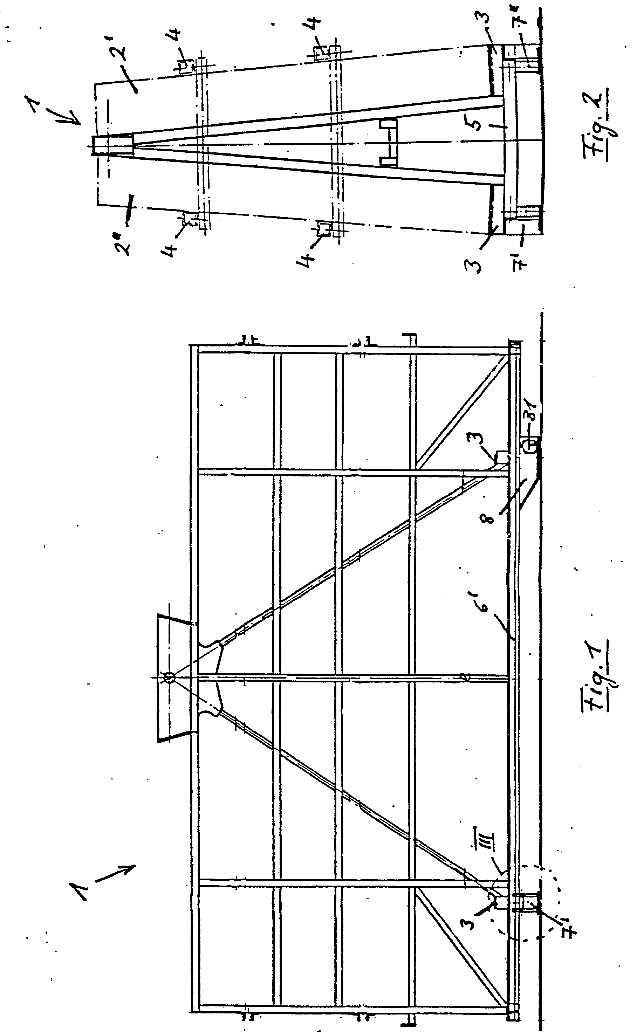

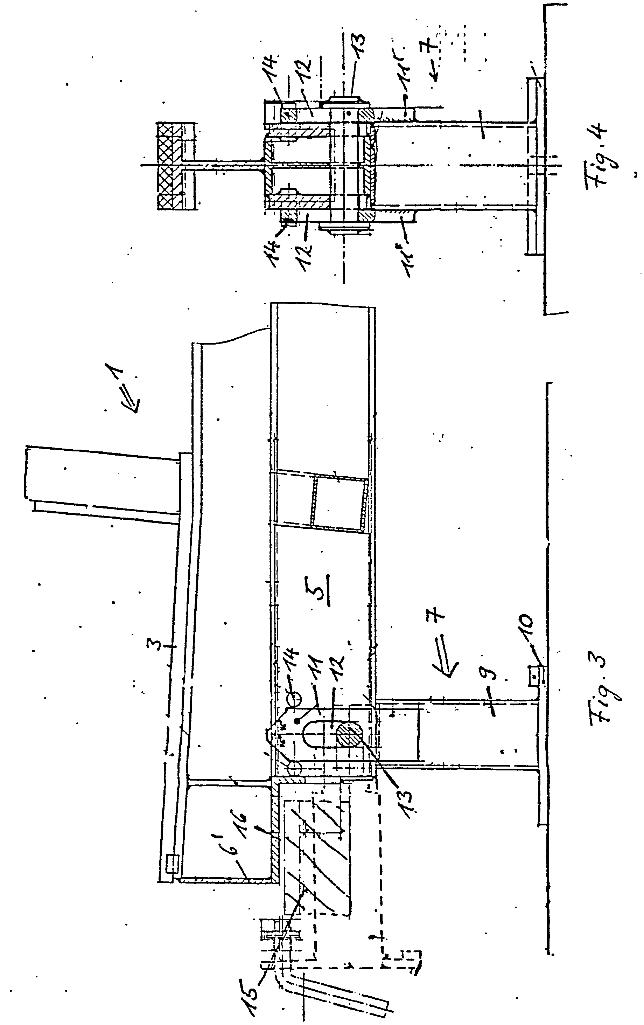

Die Fig. 1 und 2 zeigen den Aufbau eines erfindungsgemäßen Transportgestells für Flachglas-Stapel. Das Transportgestell hat einen satteldachförmigen Rahmen, der in den Fig. 1 und 2 pauschal mit 1 bezeichnet ist, und an dessen beiden Seiten Flachglas-Stapel 2' und 2'' "angelehnt" werden können. Die Flachglas-Stapel 2 liegen auf Auflagen 3 auf und werden von Sicherungsbalken 4 gehalten. Die Auflagen 3 sind auf Querträgern 5 angebracht, die über Längsträger 6' und 6'' (vgl. Figur 3) verbunden sind. An den Querträgern 5 sind bewegliche Füße 7' und 7'' sowie zwei starre Füße 8 angebracht, von denen in den Figuren nur einer dargestellt ist.

Der Aufbau des Rahmens 1 ist bekannt, so daß im folgenden lediglich die Konstruktion der erfindungsgemäß ausgebildeten Füße dargestellt werden soll.

Die Fig. 3 und 4 zeigen vergrößert den Bereich III in Fig. 1, d.h. den Bereich, in dem sich ein beweglicher Fuß 7' bzw. 7'' befindet.

Der Fuß 7 weist ein Unterteil 9 auf, an dessen Unterseite eine Bodenplatte 10 angebracht ist. An dem Unterteil 9 sind zwei Laschen 11' bzw. 11'' angebracht, die jeweils ein Längsloch 12 aufweisen. Ein an dem Querträger 5 angebrachter Zapfen 13 durchsetzt die Längslöcher 12. Ferner sind an dem Querträger 5 insgesamt vier Bolzen 14 angebracht, von denen jeweils zwei so angeordnet sind, daß die Lasche 11' bzw. 11'' in der belasteten Stellung zwischen sie eingreift. Die Bolzen 14 bilden damit einen Anschlag für die Laschen 11' bzw. 11''.

Ferner sind in den Fig. 3 und 4 schematisch Teile des Rahmens 1, die Auflage 3 für den Flachglas-Stapel sowie die Längsträger 6' und 6'' sowie eine Möglichkeit zur Verriegelung des Fusses in der hochgeschwenkten Stellung dargestellt.

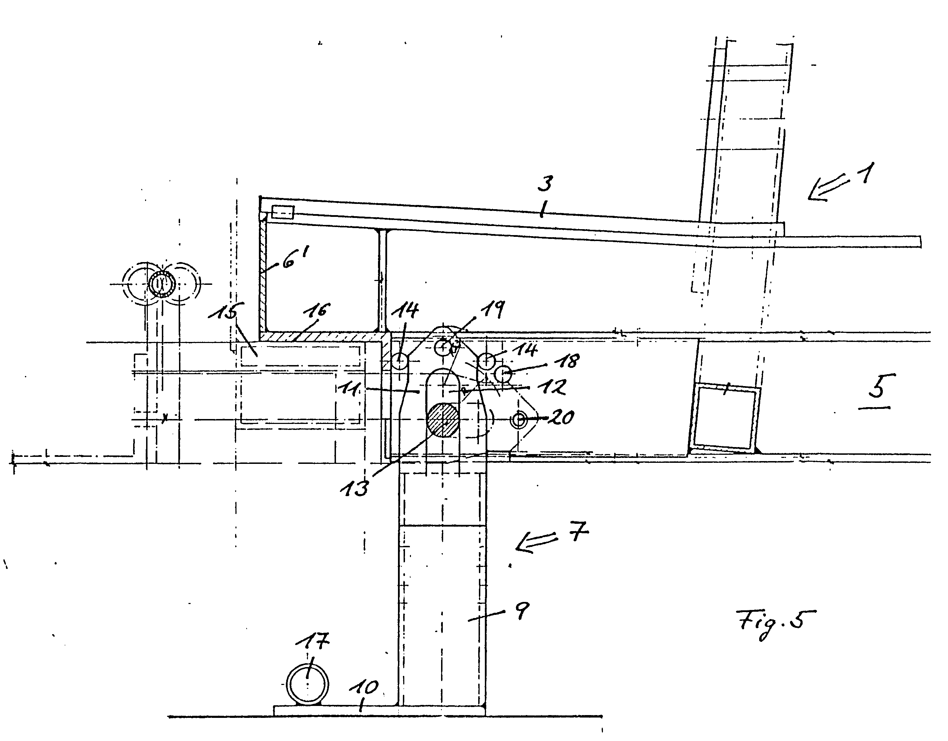

Fig. 5 zeigt für ein zweites Ausführungsbeispiel der Erfindung vergrößert den Bereich III in Fig.1. Dabei sind gleiche Teile wie in den Fig. 3 und 4 mit denselben Bezugzeichen versehen, so daß auf eine nochmalige Vorstellung der einzelnen Teile verzichtet werden kann.

Im Gegensatz zu dem in den Figuren 3 und 4 gezeigten Ausführungsbeispiel ist bei dem in Fig. 5 dargestellten Ausführungsbeispiel die Bodenplatte 10 asymmetrisch am Unterteil 9 des Fusses 7 angebracht. Der Fuß 7 ist so ausgebildet, daß er nach dem Hochschwenken um den Zapfen 12 mit seiner Unterseite in einer Ebene mit der unteren Fläche des Querträgers 5 liegt und keine Teile wie beispielsweise die Bodenplatte über den Querträger 5 hinaus nach unten ragen.

Ferner weist, der Fuß eine an der Bodenplatte 10 angebrachte Öse 17 auf mit der er in der hochgeschwenkten Stellung mittels eines Zapfens und entsprechender Löcher im Sattelanhänger verriegelbar ist. Da ferner der Fuß mittels eines einen Anschlag für die Lasche 11 bildenden Zapfens 18 sowie eines Lochs 19 in der Lasche 11 und eines entsprechenden Lochs 20 im Querträger in der hochgeschwenkten Stellung gegenüber dem Gestell 1 arretiert werden kann, kann das Gestell nicht nur über die Öse 17 gegenüber dem Sattelanhänger kipp- und verschiebesicher festgelegt, sondern auch die Füße in der hochgeschwenkten Stellung zur Verbreiterung der Auflagefläche des Gestells genutzt werden, wenn dieses beispielsweise nicht in einem Innenlader, sondern auf einem Tieflader transportiert wird.

Die folgenden Erläuterungen beziehen sich in gleicher Weise auf beide dargestellten Ausführungsbeispiele:

Wenn das Transportgestell auf dem Boden abgestellt ist, liegt das Unterteil 9 des Fußes 7 mit seiner oberen Begrenzungsfläche fest an der Unterseite des jeweiligen Querträgers 5 an. Die Lasche 11 greift dabei zwischen die beiden ihr zugeordneten Bolzen 14 ein, die eine zusätzliche Sicherung gegen Schwenkbewegungen bilden, wie sie beispielsweise beim Rückwärtsfahren des Gestells auftreten können.

Zum Aufnehmen des Transportgestells auf ein Flachglas-Innenladerfahrzeug wird das Fahrzeug zunächst in an sich bekannter Weise abgesenkt und so an das Transportgestell rückwärts herangefahren daß (gestrichelt dargestellte) Trageprofile 15 des Innenladerfahrzeugs unter die Fläche 16 des Längsträgers 6' greifen. Das Fahrzeug wird nun wieder angehoben und die nicht mehr belasteten Füße 7' bzw. 7'' "fallen" im Rahmen der Bewegungsmöglichkeit, die das Längsloch 12 erlaubt, "herab". Die Füße können somit um 90 Grad in die in Fig. 3 bzw. 5 gestrichelt dargestellte Stellung in eine Ausnehmung des Trageprofils 15 des Innenladerfahrzeugs geschwenkt und dort verriegelt werden. Diese nicht im einzelnen dargestellte Ausnehmung des Innenladerfahrzeugs bildet zugleich einen Anschlag, der das Transportgestell gegen Bewegungen entlang seiner Längsachse sowie gegen Kippbewegungen während der Fahrt sichert.

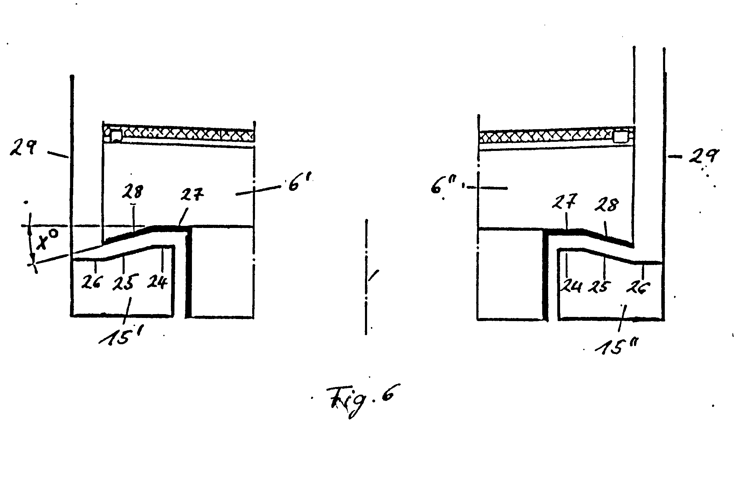

Fig. 6 zeigt schematisch den Querschnitt von Tragprofilen 15' und 15'' eines nicht näher dargestellten Flachglas-Innenladerfahrzeugs, beispielsweise eines Sattelzuges. Die Tragprofile 15 sind an nicht näher dargestellten Längsträgern 29 des Fahrzeugs angebracht. Das ebenfalls nicht näher dargestellte Transportgestell weist Längsträger 6' und 6'' auf, mit denen es auf den Tragprofilen 15' und 15'' des Fahrzeugs aufliegt.

Die Auflagefläche der Tragprofile 15 des Fahrzeugs weist einen horizontal verlaufenden Teil 24, einen nach unten geneigten Teil 25 und einen wieder horizontal verlaufenden Teil 26 auf. Diesen Auflageflächen entsprechen korrespondierende Auflageflächen am Transportgestell, nämlich die horizontal verlaufenden Flächenstück 27 und die nach unten geneigten Flächenstücke 28.

Durch diese spezielle Gestaltung der Tragprofile des Fahrzeugs sowie der entsprechenden Auflageflächen am Transportgestell wird, wie ein einfaches Kräftediagramm zeigt eine Kraftkomponente erzeugt die auf die Längsträger des Fahrzeugs in Richtung auf die Flächenmitte wirkt und so das "Auseinandergehen" des Fahrzeugs, dessen Längsträger nur im vorderen Bereich und über die nicht dargestellte Heckabschlußtüre verbunden sind, unter Last verhindert.

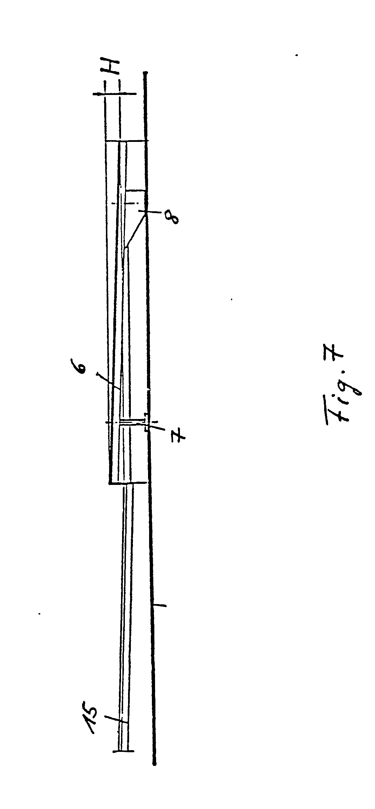

Fig. 7 zeigt schematisch die Neigung der Tragprofile 15 des Fahrzeugs sowie der Längsträger 6 des Transportgestells, an denen die korrespondierenden Auflageflächen angebracht sind. Die Füße 7 und 8 des Transportgestells sind so bemessen, daß die Längsträger 6 des abgestellten Transportgestells in Längsrichtung geneigt sind. Beim Beginn des Aufnehmens des Transportgestells durch das Innenladerfahrzeug ergibt sich somit auch ohne Absenken des Fahrzeugs ein Höhenunterschied H, der bei Beendigung des Aufnehmvorgangs Null ist. Hierdurch muß das Fahrzeug zum Aufnehmen und Absetzen des Transportgestells nicht mehr so stark abgesenkt werden, wie dies bei horizontal verlaufenden Tragprofilen der Fall ist. Dies verringert den Zeitaufwand für den Be- und Entladevorgang des Flachglas-Innenladerfahrzeugs beträchtlich.

Die vorstehende Ausbildung der Tragprofile stellt nur ein mögliches Beispiel dar. Es sind selbstverständlich die verschiedensten Modifikationen möglich. Beispielsweise kann jedes beliebige Querschnittsprofil der Tragprofile des Fahrzeugs verwendet werden, sofern das Querschnittsprofil nur eine Kraftkomponente erzeugt, die ein Auseinandergehen des Fahrzeugs unter Last verhindert.

Vorstehend ist die Erfindung anhand von Ausführungsbeispielen ohne Beschränkung des allgemeinen Erfindungsgedankens beschrieben worden. Im Rahmen der Patentansprüche sind jedoch Modifikationen möglich. Beispielsweise können alle vier Füße beweglich ausgeführt oder mehr als vier Füße vorgesehen werden. Ferner sind außer der beschriebenen, konstruktiv sehr einfachen Arretierung der Füße im belasteten Zustand andere Ausführungsformen möglich. Auch ist es möglich, ein oder mehrere Betätigungsorgane vorzusehen, die ein gemeinsames Hochschwenken und gegebenfalls Verriegeln aller Füße oder einer Gruppe von Füßen, beispielsweise der an einer Längsseite oder an einem Querträger angebrachten Füße erlauben.

Auch können in den starren Füßen 8 in Fig. 1 nur schematisch dargestellte Transportrollen 31 vorgesehen werden, die mittels eines nicht näher dargestellten Exzenters über den Außenumfang der Füße 8 vorgeschoben werden können. Hierdurch wird es möglich, das leere Gestell einfach dadurch zu verschieben, daß man die Rollen 31 "ausfährt" und das Gestell mittels eines Gabelstaplers oder eines Hubwagens anhebt.

Mit dem Begriff "starre" bzw. "feste" Füße ist lediglich gemeint, daß die Füße beim Transport des Gestells auf einem Flachglas-Innenladerfahrzeug nicht demontiert oder "weggeschwenkt" werden. Für den Transport des Gestells auf einem Tieflader können die Füße selbstverständlich demontierbar oder schwenkbar ausgeführt sein.

## Patentansprüche

1. Transportgestell für Innenladerfahrzeuge, das annähernd senkrecht gestellte plattenförmige Transportgüter, insbesondere Flachglas-Stapel (2) aufnimmt, und an den Längsseiten bewegliche Füße aufweist, die aus der Normalstellung, in der das Transportgestell auf ihnen steht, in eine Außerbetriebsstellung überführbar sind, dadurch gekennzeichnet, daß mindestens ein Fuß (7', 7") an jeder Längsseite um eine zur Längsachse des Transportgestells (1) parallele Achse schwenkbar und durch Belastung in der Normalstellung arretierbar ist.

2. Transportgestell nach Anspruch 1, dadurch gekennzeichnet, daß die beweglichen Füße (7', 7") in der hochgeschwenkten Stellung über den Außenumfang des Transportgestells (1) hinausragen.

3. Transportgestell nach Anspruch 1 oder 2, dadurch gekennzeichnet, daß an jeder Längsseite in an sich bekannter Weise zwei Füße (7' bzw. 7", 8) vorgesehen sind die an Querträgern (5) des Transportgestells angebracht sind, auf denen die Flachglas-Stapel (2', 2") aufliegen.

4. Transportgestell nach Anspruch 3, dadurch gekennzeichnet, daß die untere Begrenzungsfläche der Füße (7', 7") in der Außerbetriebsstellung in einer Ebene mit der unteren Begrenzungsfläche der Querträger (5) liegt.

5. Transportgestell nach Anspruch 3 oder 4, dadurch gekennzeichnet, daß jeder der beweglichen Füße (7' bzw. 7") ein Unterteil (9) aufweist, dessen obere Begrenzungsfläche an der Unterseite des jeweiligen Querträgers (5) anliegt und an dem mindestens ein Vorsprung oder eine Lasche (11', 11") mit einem Längsloch (12) angebracht ist, das ein an dem Querträger (5) angebrachter Zapfen (13) durchsetzt.

6. Transportgestell nach Anspruch 5, dadurch gekennzeichnet, daß die Lasche (11' bzw. 11") im belastetem Zustand an einem Anschlag (14) anliegt, der Drehbewegungen verhindert.

7. Transportgestell nach Anspruch 6, dadurch gekennzeichnet. daß den Anschlag zwei an dem jeweiligen Querträger (5) angebrachte Zapfen (13) bilden, zwischen die die Lasche (11', 11") im belasteten Zustand eingreift.

8. Transportgestell nach einem der Ansprüche 1 bis 7, dadurch gekennzeichnet, daß zur Arretierung eines Fußes (7', 7") in der Außerbetriebsstellung, d.h. der hochgeschwenkten Stellung, an einer oder beiden Seiten des Querträgers (5) mindestens ein Zapfen (18) vorgesehen ist, an dem die jeweilige Lasche (11', 11") in der hochgeschwenkten Stellung anliegt oder zwischen die sie eingreift.

9. Transportgestell nach einem der Ansprüche 1 bis 8, dadurch gekennzeichnet, daß der jeweilige Querträger (5) und die Laschen des Fußes (7', 7") Löcher (19) aufweisen, durch die zur zusätzlichen oder alleinigen Arretierung des Fußes (7) in der hochgeschwenkten Stellung sowie gegebenfalls auch in der Normalstellung ein Zapfen steckbar ist.

10. Transportgestell nach einem der Ansprüche 1 bis 9, dadurch gekennzeichnet, daß am unteren Ende des Fußes (7) eine Öse (17) vorgesehen ist, durch die zur Arretierung des Fußes (7) und des Transportgestells (1) beim Transport im Innenlader ein Zapfen steckbar ist.

11. Transportgestell nach einem der Ansprüche 1 bis 10, dadurch gekennzeichnet, daß die Füße eine asymmetrisch angebrachte Bodenplatte (10) aufweisen.

12. Transportgestell nach Anspruch 11, dadurch gekennzeichnet, daß die Öse (17) an der Bodenplatte (10) angebracht ist.

13. Transportgestell nach einem der Ansprüche 1 bis 12, dadurch gekennzeichnet, daß in an sich bekannter Weise an jeder Längsseite zwei Füße (7' bzw. 7", 8) vorgesehen sind, von denen einer (8) starr ist.

14. Transportgestell nach Anspruch 13, dadurch gekennzeichnet, daß in jedem der starren Füße (8) eine Transportrolle (31) an einem Exzenterarm angebracht ist, mittels der die Transportrolle über die Unterkante der starren Füße (8) vorschwenkbar ist.

15. Transportgestell nach Anspruch 13, dadurch gekennzeichnet, daß die starren Füße (8) demontierbar sind.

16. Flechglas-Innenladerfahrzeug mit Längsträgern, an denen die Hinterräder angebracht sind und die Trageprofile (15) aufweisen, auf die ein Tranportgestell gemäß einem der Ansprüche 1 bis 15 auflegbar ist, dadurch gekennzeichnet, daß die schwenkbaren Füße (7', 7'') in Ausnehmungen in den Trageprofilen (15) eingreifen.

17. Innenladerfahrzeug nach Anspruch 16 dadurch gekennzeichnet, daß die Tragprofile (15', 15'') ein nach außen unten geneigtes Flächenteil (25) und die korrespondierenden Auflageflächen (16) des Transportgestells einen entsprechenden Flächenteil (28) aufweisen.

18. Innenladerfahrzeug nach Anspruch 17, dadurch gekennzeichnet, daß die Tragprofile (15) und die korrespondierenden Auflageflächen (16) des Transportgestells zusätzlich einen horizontal verlaufenden Flächenteil (24 bzw. 27) aufweisen.

19. Innenladerfahrzeug nach Anspruch 17 oder 18, dadurch gekennzeichnet, daß die Tragprofile (15', 15'') des Innenladerfahrzeugs und die entsprechenden Auflageflächen (6 bzw. 16) am Transportgestell in Richtung der Längsachse nach unten hinten geneigt sind.

**Claims**

1. Transporting rack for internal loading vehicles, which picks up almost vertically positioned, slab-shaped transportation goods, particularly stacks of flat glass (2), and has movable feet on the longitudinal sides, which can be withdrawn to a non-operational position from the normal position in which the transporting rack stands upon them, wherein at least one foot (7', 7'') on each longitudinal side is pivotable about an axis parallel to the transporting rack's longitudinal axis (1) and is lockable in the normal position by means of a load.

2. Transporting rack in accordance with claim 1, wherein the movable feet (7', 7'') protrude beyond the outer periphery of the transporting rack (1) in the upward pivoted position.

3. Transporting rack in accordance with claim 1 or 2, wherein two feet (7' or 7'', 8) are provided on each longitudinal side in a manner known in its own right, which are attached to cross-members (5) of the transporting rack, upon which the stacks of flat glass (2', 2'') lie.

4. Transporting rack in accordance with claim 3, wherein the lower periphery of the feet (7', 7'') lies at a uniform level with the lower periphery of the cross-members (5) in the non-operational position.

5. Transporting rack in accordance with claim 3 or 4, wherein each of the movable feet (7' or 7'') has a bottom part (9) whose upper periphery lies on the bottom face of the respective cross-member (5) and on which at least one projection

or bracket (11', 11'') with a slotted hole (12) is attached, which is penetrated by a gudgeon (13) which is attached to the cross-member (5).

6. Transporting rack in accordance with claim 5, wherein the bracket (11' or 11'') is lying up against a stopping device (14) when in loaded condition, which prevents turning movements.

7. Transporting rack in accordance with claim 6, wherein two gudgeons (13) attached to the respective cross-member (5) form the stopping device, between which the bracket (11', 11'') engages in loaded condition.

8. Transporting rack in accordance with one of the claims 1 to 7, wherein at least one gudgeon (18) is provided on one or both sides of the cross-member (5) in order to lock a foot (7', 7'') in the non-operational position, i.e. in the upward pivoted position, up against which gudgeon the respective bracket (11', 11'') is lying in the upward pivoted position or between which it engages.

9. Transporting rack in accordance with one of the claims 1 to 8, wherein the respective cross-member (5) and the foot's brackets (7', 7'') have holes (19) through which a gudgeon can be inserted for the additional or sole locking of the foot (7) in the upward pivoted position and if necessary also in the normal position.

10. Transporting rack in accordance with one of the claims 1 to 9, wherein at the lower end of the foot (7) an eyelet (17) is provided, through which a gudgeon is insertable for the purpose of locking the foot (7) and the transporting rack (1) during transportation in the internal loader.

11. Transporting rack in accordance with one of the claims 1 to 10, wherein the feet have an asymmetrically attached base-plate (10).

12. Transporting rack in accordance with claim 11, wherein the eyelet (17) is attached to the base-plate (10).

13. Transporting rack in accordance with one of the claims 1 to 12, wherein two feet (7' or 7'', 8) are provided on each longitudinal side in a manner known in its own right, of which one (8) is rigid.

14. Transporting rack in accordance with claim 13, wherein in each of the rigid feet (8) a transport roller (31) is attached to an eccentric arm by means of which the transport roller is pivotable forwards over the lower edge of the rigid feet (8).

15. Transporting rack in accordance with claim 13, wherein the rigid feet (8) can be dismantled.

16. Flat glass internal loading vehicle with longitudinal supports upon which the rear wheels are mounted, and which have loadbearing sections (15), upon which a transporting rack can be laid in accordance with one of the claims 1 to 15, wherein the pivotable feet (7', 7'') engage in recesses in the loadbearing sections (15).

17. Internal loading vehicle in accordance with claim 16, wherein the loadbearing sections (15', 15'') have a surface part (25) inclined outwards at the bottom and the corresponding supporting surfaces (16) of the transporting rack an appropriate surface part.

18. Internal loading vehicle in accordance with claim 17, wherein the loadbearing sections (15) and the corresponding supporting surfaces (16) of the transporting rack have in addition a surface part (24 or 27) which runs horizontally.

19. Internal loading vehicle in accordance with claim 17 or 18, wherein the loadbearing sections (15', 15'') of the internal loading vehicle and the appropriate supporting surfaces (6 or 16) on the transporting rack are inclined in the direction of the longitudinal axis downwards at the rear.


## Revendications

1. Chevalet pour véhicules à plate-forme intérieure, destiné à recevoir des marchandises en plaques, disposées presque verticales, et notamment des paquets de verre plat (2), et doté sur ses grands côtés de pieds mobiles pouvant être amenés de leur position normale, à laquelle le chevalet prend appui sur eux, à une position de repos, ayant pour particularité qu'au moins un pied (7', 7'') peut pivoter sur chacun des grands côtés autour d'un axe parallèle à l'axe longitudinal du chevalet (1) et peut être immobilisé en position normale par application d'une charge.

2. Chevalet suivant spécification 1, ayant pour particularité que les pieds mobiles (7', 7'') dépassent du contour extérieur du chevalet (19) lorsqu'ils sont relevés.

3. Chevalet suivant spécification 1 ou 2, ayant pour particularité que deux pieds (7' et 7'', 8) sont prévus, comme cela a déjà été mentionné précédemment, sur chaque grand côté et que ces pieds sont fixés sur les traverses (5) du chevalet, sur lesquelles reposent les paquets de verre plat (2', 2'').

4. Chevalet suivant spécification 3, ayant pour particularité que la surface inférieure de limitation des pieds (7', 7'') lorsqu'ils sont en position de repos forme une surface plane avec la surface inférieure de limitation des traverses (5).

5. Chevalet suivant spécification 3 ou 4, ayant pour particularité que chacun des pieds mobiles (7' et 7'') possède un socle (9) dont la surface supérieure de limitation est appliquée contre la face inférieure de la traverse correspondante (5) et qui possède au moins une saillie ou une languette (11', 11'') dans laquelle est ménagé un trou oblong (12) traversé par un tenon (13) monté sur la traverse (5).

6. Chevalet suivant spécification 5, ayant pour particularité qu'en présence d'une charge, la languette (11', 11'') est appliquée contre une butée (14) empêchant toute rotation.

7. Chevalet suivant spécification 6, ayant pour particularité que la butée est formée par deux tenons (13) montés sur la traverse correspondante (5) et que la languette (11', 11'') s'engage entre ces tenons en présence d'une charge.

8. Chevalet suivant une des spécifications 1 à 7, ayant pour particularité qu'au moins un tenon (18) est prévu sur un côté ou sur les deux côtés de la traverse (5) pour le blocage d'un pied (7', 7'') en position de repos, c'est-à-dire en position relevée, et que la languette correspondante (11', 11'') est appliquée contre le tenon ou s'engage entre les deux tenons quand le pied est relevé.

9. Chevalet suivant une des spécifications 1 à 8, ayant pour particularité que la traverse (5) et les languettes du pied (7', 7'') possèdent des trous (19) dans lesquels il est possible d'introduire un tenon assurant seul ou accessoirement le blocage du pied (7) en position relevée et éventuellement aussi en position normale.

10. Chevalet suivant une des spécifications; 1 à 9, ayant pour particularité que l'extrémité inférieure du pied (7) est dotée d'un oeillet (17) dans lequel il est possible d'introduire un tenon pour le blocage du pied (7) et du chevalet (1) en cas de transport dans un véhicule à plate-forme intérieure.

11. Chevalet suivant une des spécifications 1 à 10, ayant pour particularité que les pieds possèdent une semelle (10) de disposition asymétrique.

12. Chevalet suivant spécification 11, ayant pour particularité que l'oeillet (17) est fixé sur la semelle (10).

13. Chevalet suivant une des spécifications 1 à 12, ayant pour particularité que deux pieds (7' ou 7'', 8) sont prévus, comme cela a déjà été mentionné précédemment, sur chaque grand côté du chevalet, l'un d'eux (8) étant rigide.

14. Chevalet suivant spécification 13, ayant pour particularité que chacun des pieds rigides (8) est doté d'une roulette de transport (31) montée sur un bras excentrique permettant de faire venir la roulette de transport devant le bord inférieur des pieds rigides (8).

15. Chevalet suivant spécification 13, ayant pour particularité que les pieds rigides (8) sont démontables.

16. Véhicule à plate-forme intérieure pour paquets de verre plat, avec longerons sur lesquels sont installées les roues arrière et qui possèdent des profilés de support (15) sur lesquels un chevalet suivant spécification 1 à 15 peut être posé, ayant pour particularité que les pieds pivotants (7', 7'') pénètrent dans des évidements des profilés de support (15).

17. Véhicule à plate-forme intérieure suivant spécification 16, ayant pour particularité que les profilés de support (15, 15'') présentent une surface (25) inclinée vers l'extérieur et vers le bas et que les surfaces d'appui correspondantes (16) du chevalet ont une surface correspondante (26).

18. Véhicule à plate-forme intérieure suivant spécification 17, ayant pour particularité que les profilés de support (15) et les surfaces d'appui correspondantes (16) du chevalet possèdent en outre une surface horizontale (24 et 27).

19. Véhicule à plate-forme intérieure suivant spécification 17 ou 18, ayant pour particularité que les profilés de support (15', 15'') du véhicule à plate-forme intérieure et les surfaces d'appui correspondantes (6 et 7) du chevalet sont inclinées vers l'arrière et vers le bas dans le sens de l'axe longitudinal.

_Fig. 2_

_Fig. 1_

Fig. 3

Fig. 4

0176102

Fig.5

Fig. 6

Fig. 7